# EUROPEAN PATENT SPECIFICATION

(11) **EP 2 759 196 B1**
(45) Date of publication and mention of the grant of the patent: **09.10.2019**
(21) Application number: 14152538.6
(22) Date of filing: 24.01.2014
(51) Int. Cl.: A01G 13/10

(54) **Gastropod deterrent barrier**
Gastropodenabschreckungsbarriere
Barrière de dissuasion de gastéropode

(30) Priority: 25.01.2013 GB 201301350
(43) Date of publication of application: 30.07.2014
(73) Proprietor: Molluskit Limited, Aberdeen, Aberdeenshire AB15 5NW (GB)
(72) Inventor: Inglis, Michael, Aberdeen, Aberdeenshire AB15 5NW (GB); Ross, David, Edinburgh, Lothian EH10 7DZ (GB)
(74) Representative: Peter, Kenneth William

(56) References cited:
- DE-A1- 3 804 119
- DE-A1- 3 838 876
- DE-A1- 4 000 828
- DE-C1- 3 728 731
- DE-U1-202010 012 280
- GB-A- 2 386 049

## Description

### Field of the Invention

The present invention relates to a barrier for repelling gastropods, such as slugs, and ground beetles from attacking plants.

### Background Art

Gastropods, such as slugs, snails or and like, and ground beetles can inflict significant damage to plants and crops. Solutions have been proposed to reduce or eliminate this damage.

A widely used approach is the use of slug pellets. Slug pellets are spread around the planted area and contain chemicals which incapacitate or kill slugs. However, slug pallets are effective for only a limited period of time and frequent re-application is necessary to maximise effectiveness. A further drawback is the pellets can be harmful to other animals, such as domestic pets if eaten and they are a known source of soil pollution.

An alternative approach is the use of structures which present a physical barrier to the movement of gastropods or ground beetles. Typically these barriers surround the planted area that it is desired to protect.

Each of DE-A-3838876, DE-U-202010012280, DE-A-3804119, DE-A-3728731 and DE-A-4000828 discloses a barrier for at least partially surrounding a planted area for repelling gastropods according to the preamble of claim 1.

The present inventors have appreciated such known barriers to be of limited use.

An object for the present invention is therefore to provide an improved barrier for at least partially surrounding a planted area to repel gastropods.

### Statement of Invention

The present invention has been devised in the light of the inventors' appreciation of shortcomings of known physical barriers. According to a first aspect of the present invention there is provided a barrier for at least partially surrounding a planted area for repelling gastropods, the barrier comprising:
a wall arrangement; and
a ledge extending in a direction away from the wall arrangement the ledge comprising a plurality of downwardly extending elements, characterised in that the barrier further comprises a channel between the wall arrangement and the ledge.

Providing a barrier which has a wall arrangement, a ledge extending away from the wall arrangement and a plurality of downwardly extending elements may provide a significant obstacle for a gastropod, such as a slug or other insect such as a ground beetle. The elements extend downwardly, i.e. towards the ground, when the barrier is in use. Gastropods rely on being able to attach themselves to a surface to move. To attack a plant the creature has to traverse the plurality of downwardly extending elements. Furthermore as the ledge extends away from the wall arrangement, a creature wishing to climb over the wall arrangement to reach the plants to which it is attracted has to follow a path away from the plants. When a slug realises it is moving away from the planted area it may be discouraged from proceeding any further. The ledge and the plurality of downwardly extending elements may therefore be located on a side of the wall arrangement which, in use, faces away from a planted area to be protected.

The plurality of downwardly extending elements may depend from one side of the ledge and more specifically from what is, when in use, an underside of the ledge which faces soil over which the barrier is disposed. The ledge may lie in a plane substantially perpendicular to the plane of the wall arrangement.

Adjacent downwardly extending elements may define, with a portion of an underside of the ledge, a downwardly facing U-shaped channel. Adjacent downwardly extending elements may define, with a portion of the underside of the ledge, a plurality of downwardly facing U-shaped channels. A gap between adjacent downwardly extending elements may be between 2 mm and 10 mm. More specifically, the gap between adjacent downwardly extending elements may be approximately 6 mm.

A span across all the downwardly facing U-shaped channels may be at least 50 mm. In one form, the span is approximately 80 mm. In another form, the span is approximately 56 mm. The downwardly extending elements may be ribs. The ribs may be approximately 2 mm thick. Each rib may lie in a plane parallel to the plane of the wall arrangement. The height of some of the adjacent downwardly extending elements may be different to the height of the other downwardly extending elements.

The arrangement described above provides an undulating "comb" structure which is difficult for a gastropod to traverse to reach the planted area and discourages the gastropod from bridging over a number of downwardly extending elements at once. The varying heights of the downwardly extending elements, particularly where the elements are ribs, may also make it difficult for the gastropod to follow the channels defined by the ribs because there is insufficient distance between adjacent ribs for the gastropod to squeeze in and the ribs are sized to reduce the possibility of a gastropod being able to attach to the rib edge.

Preferably, the height difference between adjacent downwardly extending elements is approximately 10 mm. It has been observed that if the height difference is much greater than 10 mm, say 15 mm, then the exposed surface between a longer and shorter rib is sufficient for a gastropod to attach to. If the height difference is much less than 10 mm, say 5 mm, a gastropod can arc its body to accommodate the difference in height. There may be a number of different heights of downwardly extending elements.

Preferably, an edge of at least one of the ribs is defined by one side of the rib tapering towards the other side to define a knife-edge. The side having the taper, in use, may face away from the planted area. Alternatively, an edge of at least one of the ribs is defined by both sides of the rib tapering towards each other to define a knife-edge. Knife edge ridges make it difficult for a gastropod to attach and make crossing the downwardly extending elements more difficult for the gastropod.

Preferably, in use, the lowest part of the downwardly extending elements is at least 50 mm above the soil. A height of 50 mm is sufficient to prevent a gastropod stretching up to attach itself to part of the barrier, thereby bypassing part of the obstacle provided by the barrier.

The barrier further comprises a channel. The channel is between the wall arrangement and the ledge. A channel may present a further obstacle to a slug that wishes to reach the planted area. The barrier may be configured such that crossing the channel will lead the slug away from the plants to which it is attracted. When the slug realises it is moving away from the planted area it may prefer to follow the channels, in a direction parallel to the planted area, because the channel provides an attractive surface for a slug to attach to. Alternatively, the slug may opt to reverse direction and return to the soil on the side of the wall facing away from the planted area being protected.

The channel may define an inverted "U" shape. The channel may have a minimum depth of 30 mm and a minimum width of 30 mm. Certain larger classifications of slug can span gaps smaller than 30 mm due to their size, dexterity and ability to attach at any point along their length. The channel may be defined by the wall arrangement, a channel base member and a channel wall member. Sides of the wall arrangement and the channel wall member may oppose each other such that they define sides of the channel. The ledge may extend from the channel wall member. More specifically the ledge may be attached to the channel wall member. The ledge may be attached to the channel wall member on a side of the channel wall member opposite the side of channel wall member which defines a side of the channel.

The barrier may further comprise a further (i.e. second) channel. Preferably, the first channel (i.e. the channel described above) is sandwiched between the second channel and the wall arrangement. The ledge may extend at least partially across the opening of the second channel. The second channel may define an inverted "V" shape. More specifically, the second channel may define an apex. A slug is more likely to sit in an apex than cross and apex. The highest point of the barrier may be defined by the base of one of the channels. More specifically, the highest point of the barrier may be defined by the apex of the second channel. The base of the second channel may be, in use, 60 mm to 100 mm higher than the base of the first channel. An edge of the second channel may include an inward facing flange.

The corners of a channel may be sharp. Slugs like to sit in sharp corners and, upon finding a corner, may prefer to stop in the corner rather than continuing to traverse the channel towards the planted area. The apex of the second, V-shaped channel may define an angle between 40 degrees and 70 degrees. A free edge of a channel may define a knife edge. A knife edge may be less readily traversed by a slug or the like.

The wall arrangement may comprise two wall members which are spaced apart from each other. The two wall members may lie in parallel planes. The two wall members may be attached to other at least at or towards ends disposed furthest from the ground over which the barrier is disposed. Such a configuration may provide for increased rigidity. The barrier may be configured such that the two wall members define a wall arrangement recess with an opening to the wall arrangement recess being oriented towards the ground when in use. The wall arrangement recess may be configured to receive a ground engaging arrangement. The ground engaging arrangement may comprise a planar member with an edge which may be sharp to aid insertion of the ground engaging arrangement into the ground. An edge of the ground engaging arrangement, e.g. an edge opposite the sharp edge, may be received in the wall arrangement recess to thereby support the barrier above the ground.

Alternatively the wall arrangement may comprise an upper wall portion and a lower wall portion, the lower wall portion being configured to be received in the ground. The distal edge of the lower wall portion may be sharp to aid insertion into the ground. The lower wall portion may be configured to be located between 50 mm and 150 mm into the ground. More specifically, the lower wall portion may be configured to be inserted 75 mm into the ground. A depth of 75 mm may be preferred as this depth may prevent slugs moving under the surface of the ground and bypassing the part of the wall arrangement that is underground. The wall arrangement may comprise an indicator arrangement to indicate an optimum insertion depth.

The barrier may be formed at least in part of a polymeric material. The polymeric material may be a plastics material or a rubber, such as recycled rubber. Alternatively, the barrier may be formed at least in part of any suitable material such as a metal, for example, aluminium alloy. The barrier may be configured to be extruded or injection moulded as a unitary component.

The barrier may be configured for connection to an adjacent barrier. A number of barriers can thus be connected to form a continuous barrier to surround a planted area. The barrier may define a profile which is configured to provide for connection with an adjacent barrier. More specifically the barrier may define a recess which is configured to receive a part of a mating member, another part of the mating member being received in a recess defined by an adjacent barrier. The mating member may be configured to change an angle defined by connected barriers. The mating member may therefore comprise a living hinge. The barrier may be configured to be connected to an adjacent barrier by way of a snap-fit arrangement. Alternatively, the barrier may be configured to be connected to an adjacent barrier by means of a tongue in groove or any other suitable fixing arrangement.

The barrier may comprise a conduit, for example a pipe, which is configured to convey fluid such as water, for example, for the purpose of irrigation or the like of fertiliser for the purpose of fertilisation of plants protected by the barrier. The conduit may comprise a plurality of apertures whereby fluid may leave the conduit and be distributed over the ground to perform its function. The barrier may comprise an attachment arrangement which is configured to attach the conduit to the barrier. The attachment arrangement may comprise a plurality of connectors with each connector being configured to grip the conduit at a different location along its length and to attach to the barrier.

The barrier may be rigid. Alternatively the barrier may be flexible. A flexible barrier may be sufficiently flexible to permit the barrier to be flexed to encircle a planted area. One end of the flexible barrier may be configured to be connected to the other end of the flexible barrier.

A coating with low shear viscosity may be provided on at least part of the barrier. More specifically, the coating may be petroleum jelly. Petroleum jelly may disable the chemical bonding of the slug and thereby compromise the ability of the slug to gain sufficient purchase to move.

The barrier may be provided with an anti-slug surface portion. The anti-slug surface portion may be formed by the inclusion of one or more additives. The additives may be selected from iron filings, sharp sand, grit, egg shell, calcified seaweed, holly leaves, thorns, cinders, dry lime, pine needles, garlic, hair, dry straw, saw dust, shredded bark, oak leaves, pine bark chips, black peat, cocoa shell mulch, aromatic herbal mulch, mint, tansy, lemon balm, diatomite.

By virtue of the present invention, there is provided a barrier which can be used to provide a barrier to repel gastropods and ground beetles from attacking a planted area.

### Brief Description of Drawings

Further features and advantages of the present invention will become apparent from the following specific description, which is given by way of example only and with reference to the accompanying drawings, in which:
Figure 1 is a side view of a barrier for repelling gastropods shown located beside a planted area;
Figure 2 is a perspective view of the barrier of Figure 1;
Figure 3 is a perspective view of a barrier for repelling gastropods according to a first embodiment of the present invention;
Figure 4 is a side view of the barrier of Figure 3;
Figure 5 is a perspective view of a barrier for repelling gastropods;
Figure 6 is a side view of the barrier of Figure 5;
Figure 7 shows perspective and side views of a barrier for repelling gastropods according to a second embodiment of the present invention;
Figure 8 shows perspective and side views of a barrier for repelling gastropods according to a third embodiment of the present invention; and
Figure 9 shows in a perspective view how two adjacent barriers are connected to each other.

### Description of Embodiments

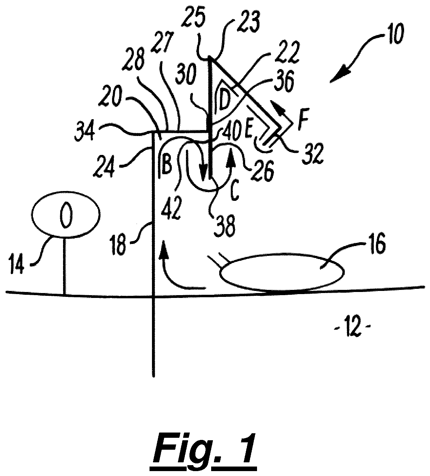

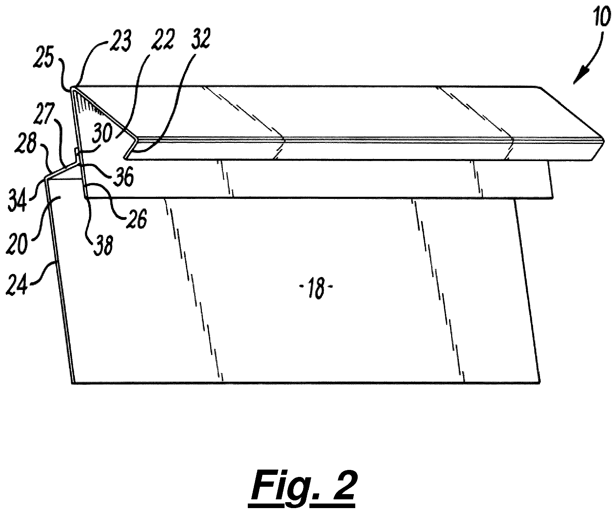

Referring firstly to Figures 1 and 2, there are shown side and perspective views respectively of a barrier, generally indicated by reference numeral 10 for repelling gastropods. Figure 1 also shows the barrier 10 inserted into soil 12 adjacent a flower 14. The flower 14 has attracted a slug 16 which must overcome the barrier 10 to feed on the flower 14.

The barrier 10 comprises a wall 18, a first downwardly facing channel 20 and a second downwardly facing channel 22. The first downwardly facing channel 20 is located parallel with and adjacent to a wall upper portion 24. The second downwardly facing channel 22 is located parallel with and adjacent to the first channel 20. The deepest point 23 of the second channel 22, that is the apex 25, defines the highest point of the barrier 10 and is at a different height to the deepest point 27 of the first channel 20.

As can be seen from Figure 1, the first channel 20 is an inverted U-shape, defined by the upper wall portion 24, a second channel wall 26 and a substantially horizontal channel base member 28 integral with the wall 18. The horizontal member 28 includes a lip 30 for attaching the horizontal member 28 to the second channel 22. The second channel 22 also includes an inwardly facing flange 32, the purpose of which will be discussed in due course. The first channel 20 has a depth of 40 mm and a width of 40 mm. A size of 40 mm is sufficient to prevent larger classifications of slug spanning and bypassing the first channel 20.

As can be seen from Figure 1, to reach the flower 14 the slug 16 will have to scale the barrier 10 following the route indicated by arrows "A" to "F". Following arrow A, the slug 16 climbs the wall 18. As the slug 16 reaches the upper wall portion 24 it will encounter a first sharp corner 34. The slug 16 may stop at this point because a sheltered sharp corner is attractive to a slug 16. Additionally, to reach the flower 14, the slug 16 will have to move in the direction of arrow B. The slug may sense moving in the direction of arrow B will take it away from the flower 14, this, again will encourage the slug to stay in the first sharp corner 16 or to move along the first channel 20 parallel to the barrier 10. If the slug continues in the direction of arrows B and C, it will encounter a second sharp corner 36, to which it may be attracted, and a knife edge 38 at the bottom of the second channel wall 26. The knife edge 38 makes it more difficult for the slug 16 to enter the second channel 22. It will be noted that the inner surface 40 of the second channel wall 26 tapers towards the outer surface 42. This arrangement is adopted to maximise the difficulty presented by the knife edge 38.

To progress, the slug 16 will have to negotiate the second channel 22, following arrows D and E. The channel apex 25 provides a further desirable sharp corner for the slug 16 to stop in. It is thought that an apex at an angle of less than 90 degrees is an even more desirable stopping place for a slug than a right angle bend. As the apex 25 is the highest point of the barrier 10, the slug 16 is even further away from the flower 14 giving the slug 16 the impression it is heading in the wrong direction. The slug 16 may therefore prefer to stop in the apex 25 to follow the second channel 22 in a direction parallel to the flower 14. If the slug opts to continue, the inwardly facing flange 32 provides a further sharp corner for the slug 16 to sit in. By continuing in the direction of arrow F the slug is again taken to the apex 25 of the barrier 10, the point furthest away from the flower 14.

The barrier 10 is one of a chain of barriers 10 (not shown) which snap fit together to encircle and protect the flower 14,

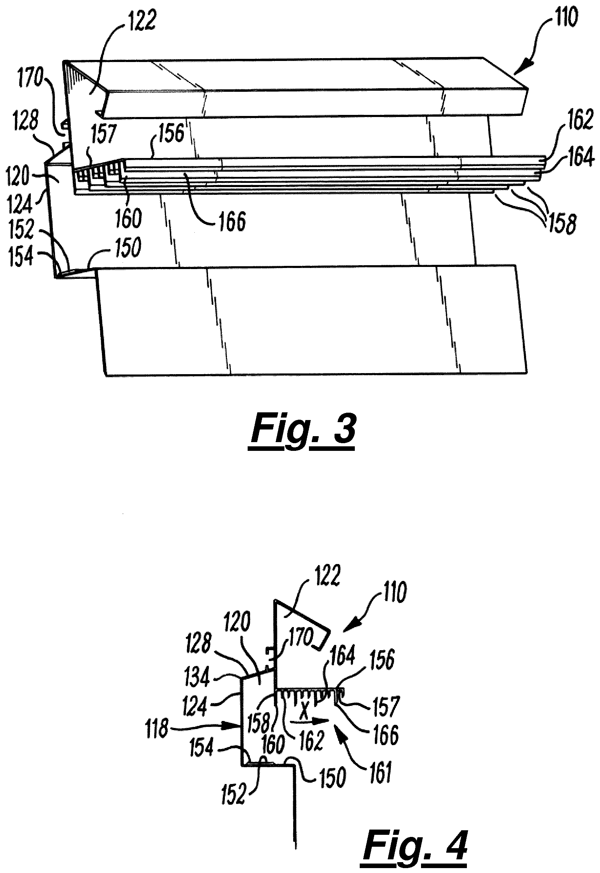

Referring now to Figures 3 and 4, there are shown perspective and side views respectively of a barrier 110 according to a first embodiment of the present invention. Some of the features of the barrier 10 and the barrier 110 are common, such as the first and second channels 20, 120, 22, 122. The additional features only of the barrier 110 of Figures 3 and 4 will now be described.

It will be noted that the substantially horizontal base member 128 is not perpendicular to the upper wall portion 124 but is at an angle, θ, of approximately 95 degrees. It will also be noted that the barrier wall 118 includes a horizontal portion 150. The horizontal portion 150 has a dual function. The first function is to provide a depth gauge to ensure the barrier 110 is inserted to optimum depth in the soil. The clearance between the soil and the lowest downwardly extending part of the barrier 110 should be at least 50 mm to prevent larger classifications of slug 16 stretching up to attach to part of the downwardly extending features and bypassing some of the obstacles provided.

The upper surface 152 of the horizontal portion 150 is a surface to which a coating 154 can be applied. The coating 154 in the present case is broken eggshells, a material which the slug 16 will have great difficulty in crossing as slugs find it difficult to get any purchase to move across a bed of eggshells.

The barrier 110 is also provided with a ledge 156 extending from the second channel wall inner surface 140. Extending downwardly from the ledge underside 157 is a series of parallel ribs 158. There are two lengths of ribs 158, shallow ribs 160 and deep ribs 162. Looking at Figure 4 it can be seen from the side that the ledge 156 and the ribs 158 together resemble an undulating "comb" 161. To scale the barrier 110, the slug 16 must pass along the comb 161 in the direction of arrow "X". The deep ribs 162 are approximately 24 mm apart. The height difference between the deep ribs 162 and the shallow ribs 160 is selected to be short enough to minimise the amount of the exposed deep rib vertical surface 164. Minimising the amount of exposed surface reduces the slug's 16 ability to adhere to the surface. However, if the difference in heights is too small then the rib ends 166 will be arranged such that the slug 16 can treat the ends 166 as a planar surface and pass over with relative ease. The barrier 110 of Figures 3 and 4 is arranged such that the exposed surface 164 is 10 mm deep.

It can also be seen that each of the rib ends 166 defines a knife-edge, which, as previously discussed, increases the difficulty posed by the arrangement to a slug that wishes to progress in the direction of arrow X.

Each rib 158 is spaced apart from an adjacent rib 158 by 6 mm with each rib 158 being 2 mm thick. The 6 mm gap is sufficient to prevent the slug 16 from squeezing in between adjacent ribs 158 and finding a surface to latch onto.

The barrier 110 includes a slot 170 which is adapted to receive a latch or mating member to permit the barrier to be connected to an adjacent barrier (not shown) to lock two barriers together. In this way a chain of barriers 110 can be formed to encircle and protect a plant 14.

The barrier 110 is extruded as a unitary article from recycled rubber.

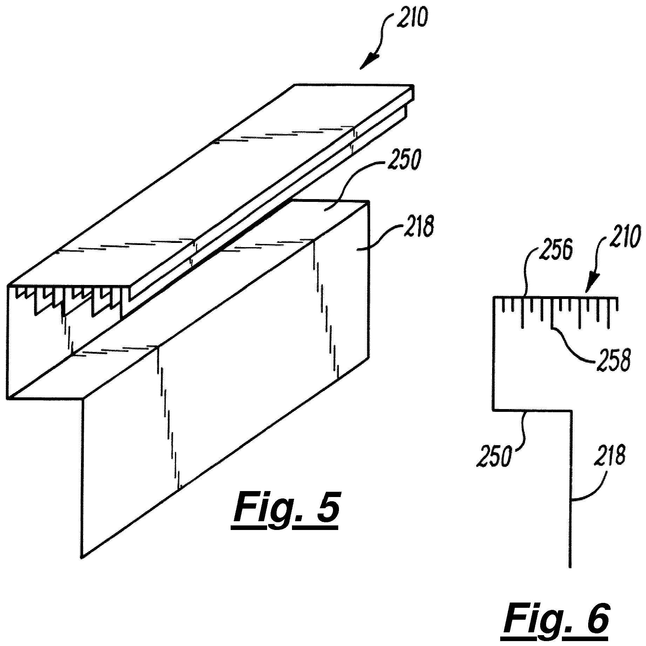

Referring now to Figures 5 and 6, there are shown perspective and side views respectively of a barrier 210. The barrier 210 includes a wall member 218 with a horizontal portion 250, a ledge 256 and a rib arrangement 258. These features work together in the same way as the equivalent features of Figures 3 and 4.

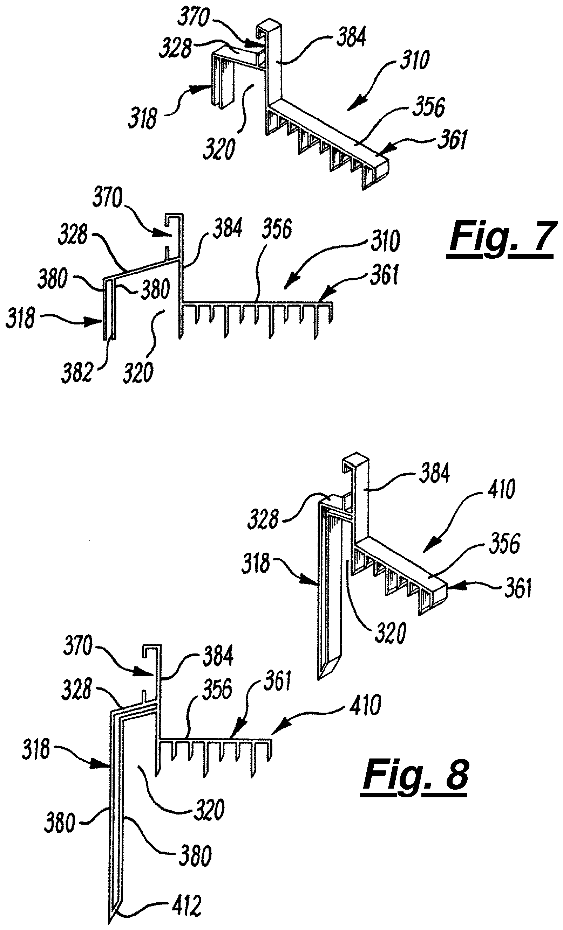

Perspective and side views of a barrier 310 for repelling gastropods according to a second embodiment of the present invention are shown in Figure 7. The barrier 310 of Figure 7 comprises a wall arrangement 318, a downwardly facing channel 320 of generally inverted U-shape, a slot 370 and a comb arrangement 361. The wall arrangement 318 comprises two wall members 380 which are spaced apart from each other and lie in parallel planes to thereby define a wall arrangement recess 382 between them with the wall arrangement recess 382 being open at the distal ends of the wall members 380. The wall arrangement recess 382 receives an edge of a planar ground engaging member (not shown). An edge of the ground engaging member opposite the edge received in the wall arrangement recess 382 tapers to define a sharp edge. In use, the ground engaging member is inserted into the ground to thereby support the barrier 310 shown in Figure 7 above the ground. The downwardly facing channel 320 is defined by the wall arrangement 318, a channel base member 328 which is at an angle of approximately 95 degrees to the wall arrangement 318 and a channel wall member 384. Sides of the wall arrangement 318 and the channel wall member 384 oppose each other such that they define sides of the channel. The channel wall member 384 extends above the channel base member 328 to thereby define a base of the slot 370. The comb arrangement 361 comprises a ledge 356 which is attached to the channel wall member 384 such that the ledge 356 extends perpendicularly from the channel wall member 384. Otherwise the comb arrangement 361 is of a form as described above with reference to Figures 3 and 4 in respect of the like of the provision of ribs of differing heights from an underside surface of the ledge 356. Each of the width and depth of the U-shaped channel 320 is about 35 mm. The ledge is about 80 mm wide (i.e. in a direction away from the channel wall member 384).

The barrier 310 of Figure 7 is operative to repel slugs as is described above with reference to Figures 1 to 4 with regard to the U-shaped channel 320 and the comb arrangement 361. In an un-illustrated form of the barrier 310 of Figure 7, the width of the U-shaped channel 320 is reduced to 17 mm and the width of the ledge 356 is reduced to 56 mm. In view of the reduction in width of the ledge 356 the number of ribs is reduced from ten to seven whereby the spacing of the ribs is maintained.

Perspective and side views of a barrier 410 for repelling gastropods according to a third embodiment of the present invention are shown in Figure 8. Parts in common with the barrier 310 of Figure 7 are designated by the same reference numerals and the reader's attention is directed to the aforegoing description of Figure 7 in this regard. The barrier 410 of Figure 8 differs from the barrier of Figure 310 in respect of the two wall members 380 being of greater length and being joined at their distal ends to define a sharp edge 412. There is therefore no need for the ground engaging member described above with reference to Figure 7 because the wall arrangement 318 of Figure 8 is configured of itself to be inserted into the ground. The width of each of the U-shaped channel 320 and the comb arrangement 361 of Figure 8 is the same as the un-illustrated form of the barrier 310 of Figure 7 described above.

Although not shown in the drawings, the barrier 10, 110, 210, 310, 410 comprises a pipe which, when in use, conveys fluid such as water for the purpose of irrigation or the like of liquid fertiliser for the purpose of fertilisation of plants protected by the barrier. The pipe comprises a plurality of apertures along its length whereby fluid is ejected under pressure from the pipe for distribution over the ground to perform its function. The barrier further comprises an un-illustrated attachment arrangement which is operative to attach the pipe to the barrier. The attachment arrangement comprises a plurality of connectors with each connector being configured to grip the pipe at a different location along its length and to attach to the barrier. Any suitable known connector may be used. On the other hand, the design of a suitable connector will be within the ordinary design capabilities of the person skilled in the art.

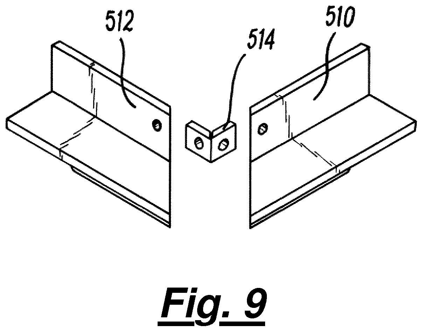

The connection of two adjacent barriers 510, 512 to each other is shown in Figure 9. A first half of a living hinge 514 is received in the slot 170, 370 of the first barrier and the second half of the living hinge 514 is received in the slot 170, 370 of the second barrier whereby the two barriers 510, 512 may be disposed on the ground at an angle to each other. In another un-illustrated embodiment, a straight rigid member is used instead of the living hinge 514 with one half of the rigid member being received in the slot 170, 370 of the first barrier and the second half of the rigid member being received in the slot 170, 370 of the second barrier to thereby provide for in-line disposition of the two barriers 510, 512. The living hinge 514 and the rigid member are formed by injection moulding of polypropylene.

Various modifications may be made to the described embodiments without departing from the scope of the invention. For example, the barriers described above are adapted to be linked to adjacent barriers to form a chain of barriers to surround a planted area. In an alternative embodiment the barrier is flexible and of sufficient length to be bent to a shape which encircles the planted area with one end of the flexible barrier being connectable to the other end.

Those of skill in the art will recognise that each of the above described embodiments of the invention provides a barrier to repel gastropods and ground beetles from attacking a planted area.

## Claims

1. A barrier (110, 310, 410) for at least partially surrounding a planted area for repelling gastropods (16), the barrier comprising:
a wall arrangement (118, 318); and
a ledge (156, 356) extending in a direction away from the wall arrangement, the ledge comprising a plurality of downwardly extending elements (158), **characterised in that** the barrier further comprises a channel (120, 320) between the wall arrangement (118, 318) and the ledge (156).

2. The barrier according to claim 1 in which the ledge lies in a plane substantially perpendicular to a plane of the wall arrangement.

3. The barrier according to claim 1 or 2 in which adjacent downwardly extending elements (158) define, with a portion of an underside (157) of the ledge, a downwardly facing U-shaped channel.

4. The barrier according to any one of the preceding claims in which a gap between adjacent downwardly extending elements is between 2 mm and 10 mm.

5. The barrier according to any one of the preceding claims in which the downwardly extending elements are ribs with each rib lying in a plane parallel to a plane of the wall arrangement.

6. The barrier according to any one of the preceding claims in which a height of some downwardly extending elements (160) are different to a height of other downwardly extending elements (162).

7. The barrier according to any one of the preceding claims in which an edge of at least one of the downwardly extending elements is defined by one side of the downwardly extending element tapering towards the other side to define a knife-edge (166).

8. The barrier according to any one of the preceding claims in which the channel defines an inverted "U" shape of a minimum depth of 30 mm and a minimum width of 30 mm.

9. The barrier according to any one of the preceding claims further comprising a second channel (122), the first channel being sandwiched between the second channel and the wall arrangement.

10. The barrier according to claim 9 in which the ledge (156) extends at least partially across the opening of the second channel (122).

11. The barrier according to claim 9 or 10 in which a base of the second channel is, in use, 60 mm to 100 mm higher than a base of the first channel.

12. The barrier (310, 410) according to any one of the preceding claims in which the wall arrangement (318) comprises two wall members (380) which are spaced apart from each other, the two wall members lying in parallel planes and being attached to each other at or towards ends thereof furthest from ground over which the barrier is disposed.

13. The barrier according to claim 12 in which the two spaced apart wall members (380) define a recess (382) therebetween configured to receive a ground engaging arrangement, the ground engaging arrangement comprising a planar member having a sharp distal edge.

14. The barrier according to any one of claims 1 to 12 in which the wall arrangement (118, 318) comprises an upper wall portion and a lower wall portion, the lower wall portion being configured to be received in the ground.

15. The barrier according to any one of the preceding claims further comprising a conduit and an attachment arrangement, the conduit being configured to convey fluid and having a plurality of apertures therethrough whereby fluid leaves the conduit and is distributed over ground on which the barrier is supported, the attachment arrangement comprising a plurality of connectors with each of the plurality of connectors being configured to attach to the barrier and to grip the conduit at a different location along its length.

## Patentansprüche

1. Barriere (110, 310, 410), um einen bepflanzten Bereich mindestens teilweise zu umgeben, um Gastropoden (16) abzuschrecken, wobei die Barriere umfasst:
eine Wandanordnung (118, 318); und
eine Leiste (156, 356), die sich in eine Richtung erstreckt, die von der Wandanordnung weg weist, wobei die Leiste eine Vielzahl sich abwärts erstreckender Elemente (158) umfasst,
**dadurch gekennzeichnet, dass** die Barriere ferner einen Kanal (120, 320) zwischen der Wandanordnung (118, 318) und der Leiste (156) umfasst.

2. Barriere nach Anspruch 1, wobei die Leiste in einer Ebene liegt, die im Wesentlichen senkrecht zu einer Ebene der Wandanordnung ist.

3. Barriere nach Anspruch 1 oder 2, wobei die sich abwärts erstreckenden Elemente (158) zusammen mit einem Abschnitt einer Unterseite (157) der Leiste einen abwärts weisenden U-förmigen Kanal definieren.

4. Barriere nach einem der vorhergehenden Ansprüche, wobei ein Spalt zwischen benachbarten, sich abwärts erstreckenden Elementen zwischen 2 mm und 10 mm breit ist.

5. Barriere nach einem der vorhergehenden Ansprüche, wobei die sich abwärts erstreckenden Elemente Rippen sind, wobei jede Rippe in einer Ebene parallel zu einer Ebene der Wandanordnung liegt.

6. Barriere nach einem der vorhergehenden Ansprüche, wobei eine Höhe von einigen sich abwärts erstreckenden Elementen (160) sich von einer Höhe von anderen sich abwärts erstreckenden Elementen (162) unterscheidet.

7. Barriere nach einem der vorhergehenden Ansprüche, wobei ein Rand von mindestens einem der sich abwärts erstreckenden Elemente durch eine Seite des sich abwärts erstreckenden Elements definiert ist, die sich in Richtung der anderen Seite verjüngt, um einen Klingenrand (166) zu definieren.

8. Barriere nach einem der vorhergehenden Ansprüche, wobei der Kanal eine Form eines umgekehrten "U" mit einer minimalen Tiefe von 30 mm und einer minimalen Breite von 30 mm definiert.

9. Barriere nach einem der vorhergehenden Ansprüche, ferner umfassend einen zweiten Kanal (122), wobei der erste Kanal sandwichartig zwischen dem zweiten Kanal und der Wandanordnung liegt.

10. Barriere nach Anspruch 9, wobei die Leiste (156) sich mindestens teilweise über die Öffnung des zweiten Kanals (122) erstreckt.

11. Barriere nach Anspruch 9 oder 10, wobei eine Basis des zweiten Kanals bei Gebrauch 60 mm bis 100 mm höher als eine Basis des ersten Kanals ist.

12. Barriere (310, 410) nach einem der vorhergehenden Ansprüche, wobei die Wandanordnung (318) zwei Wandelemente (380) umfasst, die voneinander beabstandet sind, wobei die beiden Wandelemente in parallelen Ebenen liegen und aneinander befestigt sind, oder in Richtung ihrer Enden am weitesten von dem Boden entfernt sind, über dem die Barriere angeordnet ist.

13. Barriere nach Anspruch 12, wobei die beiden beabstandeten Wandelemente (380) eine Aussparung (382) zwischen ihnen definieren, die ausgestaltet ist, um eine Bodeneingriffanordnung aufzunehmen, wobei die Bodeneingriffanordnung ein planares Element mit einem scharfen distalen Rand umfasst.

14. Barriere nach einem der Ansprüche 1 bis 12, wobei die Wandanordnung (118, 318) einen oberen Wandabschnitt und einen unteren Wandabschnitt umfasst, wobei der untere Wandabschnitt so ausgestaltet ist, dass er im Boden aufgenommen wird.

15. Barriere nach einem der vorhergehenden Ansprüche, ferner umfassend eine Rohrleitung und eine Befestigungsanordnung, wobei die Rohrleitung ausgestaltet ist, um Fluid zu transportieren, und eine Vielzahl von hindurch führenden Öffnungen aufweist, durch die Fluid die Rohrleitung verlässt und über den Boden verteilt wird, auf dem die Barriere gehalten wird, wobei die Befestigungsanordnung eine Vielzahl von Verbindungsstücken umfasst, wobei jedes von der Vielzahl der Verbindungsstücke ausgestaltet ist, um an der Barriere befestigt zu werden und die Rohrleitung an unterschiedlichen Stellen entlang ihrer Länge zu greifen.

## Revendications

1. Barrière (110, 310, 410) pour au moins partiellement entourer une surface plantée pour repousser des gastropodes (16), la barrière comprenant :
un agencement de paroi (118, 318) ; et
un rebord (156, 356) s'étendant dans une direction s'éloignant de l'agencement de paroi, le rebord comprenant une pluralité d'éléments s'étendant vers le bas (158),
**caractérisée en ce que** la barrière comprend en outre un canal (120, 320) entre l'agencement de paroi (118, 318) et le rebord (156).

2. Barrière selon la revendication 1, dans laquelle le rebord repose dans un plan sensiblement perpendiculaire à un plan de l'agencement de paroi.

3. Barrière selon la revendication 1 ou 2, dans laquelle des éléments adjacents s'étendant vers le bas (158) définissent, avec une partie d'une face inférieure (157) du rebord, un canal en U faisant face vers le bas.

4. Barrière selon l'une quelconque des revendications précédentes, dans laquelle un espace entre des éléments adjacents s'étendant vers le bas varie entre 2 mm et 10 mm.

5. Barrière selon l'une quelconque des revendications précédentes, dans laquelle les éléments s'étendant vers le bas sont des nervures, chaque nervure reposant dans un plan parallèle à un plan de l'agencement de paroi.

6. Barrière selon l'une quelconque des revendications précédentes, dans laquelle une hauteur de certains éléments s'étendant vers le bas (160) est différente d'une hauteur d'autres éléments s'étendant vers le bas (162).

7. Barrière selon l'une quelconque des revendications précédentes, dans laquelle un bord d'au moins un des éléments s'étendant vers le bas est défini par un côté de l'élément s'étendant vers le bas se rétrécissant vers l'autre côté pour définir un tranchant de couteau (166).

8. Barrière selon l'une quelconque des revendications précédentes, dans laquelle le canal définit une forme en « U » inversé d'une profondeur minimale de 30 mm et d'une largeur minimale de 30 mm.

9. Barrière selon l'une quelconque des revendications précédentes, comprenant en outre un second canal (122), le premier canal pris en sandwich entre le second canal et l'agencement de paroi.

10. Barrière selon la revendication 9, dans laquelle le rebord (156) s'étend au moins partiellement à travers l'ouverture du second canal (122).

11. Barrière selon la revendication 9 ou 10, dans laquelle une base du second canal est, lors de l'utilisation, de 60 mm à 100 mm plus haute qu'une base du premier canal.

12. Barrière (310, 410) selon l'une quelconque des revendications précédentes, dans laquelle l'agencement de paroi (318) comprend deux éléments de paroi (380) qui sont espacés l'un de l'autre, les deux éléments de paroi reposant dans des plans parallèles et étant fixés l'un à l'autre aux ou vers les extrémités de ceux-ci plus loin du sol au-dessus duquel la barrière est placée.

13. Barrière selon la revendication 12, dans laquelle les deux éléments de paroi espacés (380) définissent un creux (382) entre les deux conçu pour recevoir un agencement en contact avec le sol, l'agencement en contact avec le sol comprenant un élément planaire ayant un bord distal coupant.

14. Barrière selon l'une quelconque des revendications 1 à 12, dans laquelle l'agencement de paroi (118, 318) comprend une partie de paroi supérieure et une partie de paroi inférieure, la partie de paroi inférieure étant conçue pour être reçue dans le sol.

15. Barrière selon l'une quelconque des revendications précédentes, comprenant en outre un conduit et un agencement de fixation, le conduit étant conçu pour transporter un fluide et ayant une pluralité d'ouvertures à travers celui-ci par lesquels le fluide quitte le conduit et est distribué sur le sol sur lequel la barrière est supportée, l'agencement de fixation comprenant une pluralité de connecteurs avec chacun de la pluralité de connecteurs étant conçu pour se fixer à la barrière et pour saisir le conduit à un emplacement différent le long de sa longueur.
